# EUROPEAN PATENT APPLICATION

(11) **EP 4 582 205 A1**
(43) Date of publication of application: **09.07.2025**
(21) Application number: 23860404.5
(22) Date of filing: 30.08.2023
(51) Int. Cl.: B23K 1/008, B23K 1/06

(54) **BRAZING DEVICE AND METHOD FOR BRAZING ASSEMBLY**

(30) Priority: 30.08.2022 JP 2022137025
(71) Applicant: Niigata University, Niigata-shi, Niigata 950-2181 (JP); Sumitomo Precision Products Co., Ltd., Hyogo 660-0891 (JP)
(72) Inventor: SASAKI, Tomohiro, Niigata-shi, Niigata 950-2181 (JP); UEDA, Tatsuya, Amagasaki-shi, Hyogo 660-0891 (JP); SUEDA, Koki, Amagasaki-shi, Hyogo 660-0891 (JP)
(74) Representative: Viering, Jentschura & Partner mbB Patent- und Rechtsanwälte
(86) International application number: PCT/JP2023/031477
(87) International publication number: WO 2024/048642

(57) **Abstract**

A brazing apparatus (100) according to this invention includes a stage (10) supporting the assembly (AS) with the brazing materials (120) being interposed between the joint surfaces (130) of the plurality of to-be-joined materials (110); a pressure applier (20) applying a pressure to the assembly toward the stage; a heater (30) heating the assembly to a predetermined temperature that melts the brazing material in the assembly; and a vibration applier (40) applying ultrasonic vibration. The vibration applier removes oxide film on the joint surfaces of the plurality of to-be-joined materials by vibrating the stage and the pressure applier relative to each other with the assembly under the pressure having been heated to the predetermined temperature.

## Description

### Technical Field

The present invention relates to a brazing apparatus and an assembly-brazing method, in particular to a brazing apparatus and an assembly-brazing method using ultrasonic vibration for brazing.

### Background Art

Brazing methods using ultrasonic vibration for brazing are known in the art. Such brazing methods are disclosed in Japanese Patent Laid-Open Publications No. JP 2002-86264 and No. JP H05-329626.

### Prior Art

### Patent Document

Patent Document 1: Japanese Patent Laid-Open Publication No. JP 2002-86264
Patent Document 2: Japanese Patent Laid-Open Publication No. JP H05-329626

### Summary of the Invention

### Problems to be Solved by the Invention

The above Japanese Patent Laid-Open Publication No. JP 2002-86264 disclose a brazing method, when joining engaged parts of two pipes engaged with each other by brazing, connecting a vibrator of an ultrasonic vibration generator to one of the pipes, heating the engaged parts to a brazing temperature by using heat of a gas flame while ultrasonically vibrating the engaged parts by activating the ultrasonic vibration generator so as to join the engaged parts by using a wire-shaped brazing material containing a flux component. The above Japanese Patent Laid-Open Publication No. JP 2002-86264 states effects in which the ultrasonic vibration causes the flux-containing brazing material to flow into a part to be brazed, and causes the flux in the brazing material to come out.

The above Japanese Patent Laid-Open Publication No. JP H05-329626 disclose a brazing method interposing a brazing material between joint surfaces of two aluminum materials, pressing both aluminum materials in a direction of pressing the joint surfaces against each other, applying ultrasonic vibration to one of the aluminum materials to remove oxide film on its joint surface, and at the same time generating frictional heat between each aluminum material and the brazing material to melt the brazing material by using this frictional heat so as to join the two aluminum materials by brazing.

Brazing techniques using ultrasonic vibration, such as those disclosed in the above Japanese Patent Laid-Open Publication No. JP 2002-86264 and Japanese Patent Laid-Open Publication No. JP H05-329626, are limitedly used to join relatively small and simply shaped parts to each other by brazing. One factor of the reason can be provided by that, in a case of a relatively large and complex assembly, there is no means for effectively applying ultrasonic vibration to joint surfaces of the assembly having a complex structure.

In a case of brazing for such a relatively large and complex assembly, a vacuum heating brazing method using large heating and exhausting equipment or a brazing method using flux that chemically removes oxide film is used in the art. Since these brazing methods require large equipment and flux, which limits materials to be joined, it is desired to be able to apply a brazing method using ultrasonic vibration to relatively large and complex assemblies.

The present invention is intended to solve the above problem, and one object of the present invention is to provide a brazing apparatus and an assembly-brazing method using ultrasonic vibration applicable to relatively large and complex assemblies.

### Means for Solving the Problems

In order to attain the aforementioned object, the present inventor has diligently studied a brazing apparatus and an assembly-brazing method, and as a result has found that instead of ultrasonic vibration that is directly applied to an assembly itself, relative vibration that is produced between a stage supporting the assembly and a pressure applier applying a pressure to the assembly by ultrasonic vibration can bring parts forming the assembly into contact with each other and can effectively remove oxide film on the joint surface. Based on this finding, a brazing apparatus according to a first aspect of the present invention includes a stage supporting an assembly with a brazing material being interposed between joint surfaces of a plurality of to-be-joined materials; a pressure applier applying a pressure to the assembly, which is supported by the stage, toward the stage; a heater heating the assembly to a predetermined temperature that melts the brazing material in the assembly; and a vibration applier applying ultrasonic vibration to at least one of the stage and the pressure applier, wherein the vibration applier removes oxide film on the joint surfaces of the plurality of to-be-joined materials by vibrating the stage and the pressure applier relative to each other with the assembly under the pressure having been heated to the predetermined temperature.

Here, the term "ultrasonic vibration" in the present invention refers to a broad sense that includes elastic vibration waves having a high frequency (temporal frequency) and vibration in a frequency band that can be generally generated by devices such as ultrasonic vibrators and ultrasonic vibration generators. Although one of definitions of ultrasonic waves is known which define frequencies outside the human audible range (approximately not smaller than 20 kHz), the ultrasonic vibration in the present invention includes frequencies smaller than 20 kHz). For example, a concept of the ultrasonic vibration in the present invention includes vibrations between not smaller than 10 kHz and not greater than 500 KHz.

In the brazing apparatus according to the first aspect of the present invention, as discussed above, a vibration applier applying ultrasonic vibration to at least one of the stage and the pressure applier is provided, and the vibration applier removes oxide film on the joint surfaces of the plurality of to-be-joined materials by vibrating the stage and the pressure applier relative to each other with the assembly under the pressure having been heated to the predetermined temperature. According to this configuration, oxide film can be removed from the joint surfaces by colliding the plurality of to-be-joined materials, which form the assembly, with each other by producing relative vibration between the stage and the pressure applier. Since the assembly entirely vibrates, even in a case of relatively large and complex assemblies having a plurality of (a number of) joint points, oxide film on joint surfaces at those points can be effectively removed. Since the oxide film, which prevents joining of the plurality of to-be-joined materials with each other by brazing material, is removed, the plurality of to-be-joined materials can be joined with each other by the brazing material melted by heating. Consequently, it is possible to provide brazing using ultrasonic vibration applicable to relatively large and complex assemblies.

In the first aspect of the present invention, it is preferable that the vibration applier resonantly vibrates a to-be-vibrated object, which is at least one of the stage and the pressure applier, by applying ultrasonic vibration to the to-be-vibrated object. According to this configuration, relative vibration having a large amplitude, which effectively removes oxide film on the joint surface, can be efficiently generated by smaller less energy by using a resonance phenomenon.

In this configuration, it is preferable that the assembly has a structure in which the plurality of to-be-joined materials are stacked on or above each other with the joint surfaces being positioned inside the assembly; and that the vibration applier applies ultrasonic vibration to the to-be-vibrated object in a direction extending a direction in which the plurality of to-be-joined material are stacked on or above each other. According to this configuration, a direction of displacement of the vibration can agree with the direction in which the plurality of to-be-joined materials are stacked on or above each other (i.e., a direction in which the joint surfaces face each other). Consequently, since the relative vibration between the stage and the pressure applier can cause effective collision between the joint surfaces, it is possible to effectively remove the oxide film on the joint surfaces.

In the configuration in which the vibration applier applies ultrasonic vibration to the to-be-vibrated object in a direction extending a direction in which the plurality of to-be-joined material are stacked on or above each other, it is preferable that the pressure applier is arranged on or above the assembly, which is placed on or above the stage, and presses the assembly by using its own weight. According to this configuration, since attenuation of vibration can be reduced as compared with a case in which the pressure applier is attached to an object other than stage, it is possible to easily generate relative vibration between the stage and the pressure applier.

In the first aspect of the present invention, it is preferable that the heater has a furnace chamber that accommodates the stage, the assembly and the pressure applier inside the heater, heats an interior of the furnace chamber, and has an opening in a part of the furnace chamber; and that the vibration applier includes a vibrator arranged outside the furnace chamber and a vibration transmitter connected to the vibrator and inserted into the interior of the furnace chamber through the opening. According to this configuration, it is possible to apply ultrasonic vibration to the to-be-vibrated object in the furnace chamber through the vibration transmitter with the vibrator being arranged outside the furnace chamber, which is heated to the predetermined temperature to melt the brazing material. Consequently, it is possible to prevent the vibrator from being subjected to impermissible high temperatures. For example, in a case in which the heating temperature (predetermined temperature) of the heater reaches several hundred °C, the vibrator cannot be used in the furnace chamber, but the aforementioned configuration can apply ultrasonic vibration even under such high temperature conditions.

In this configuration, it is preferable that the heater has the opening in a lower surface of the furnace chamber; and that the vibration transmitter is inserted into the interior of the furnace chamber from a lower side of the furnace chamber through the opening and is in contact with the lower surface of the stage. According to this configuration, even such a simple configuration can apply ultrasonic vibration to the stage even in a case in which the stage, the assembly, and the pressure applier are placed in the furnace chamber.

In the aforementioned configuration in which the vibration transmitter is inserted from the lower side of the furnace chamber and is in contact with the lower surface of the stage, it is preferable that the vibration transmitter supports the stage on which the assembly is placed. According to this configuration, the vibration transmitter serves not only to transmit vibration produced by the vibrator to the stage, but also to support the stage in the furnace chamber. Consequently, since a separate structure supporting the stage in the furnace chamber is not additionally required, it is possible to simplify a configuration of the apparatus. Also, in a case in which the stage is supported only by the vibration transmitter, since the vibration of the stage is not attenuated by contact of the vibration transmitter with other parts, it is possible to more effectively vibrate the stage.

In the first aspect of the present invention, it is preferable that the predetermined temperature is a temperature at which the brazing material partially melts and is brought into a solid-liquid coexisting state. In other words, the predetermined temperature is set lower than the temperature at which a brazing material is completely brought into in a liquid phase. According to this configuration, since conditions that generate the relative vibration between the stage and the pressure applier, which causes collision between parts in the assembly, can cause the brazing material to forcedly flow, so that the brazing material can be brought into a solid-liquid coexisting state, which is before the brazing material is brought in a complete liquid phase and has too much fluidity, the brazing material in a proper flow state can be obtained in consideration of the relative vibration.

In the first aspect of the present invention, it is preferable that the heater heats the assembly in a normal atmosphere and at an atmospheric pressure. As discussed above, since oxide film on the joint surfaces can be removed by applying the ultrasonic vibration, it is possible to provide brazing in a normal atmosphere and at an atmospheric pressure without using a vacuum brazing method. Consequently, since even in a case of brazing for relatively large and complex assemblies, large heating and exhausting equipment is not required, it is possible to simplify a configuration of the apparatus and to reduce a size of the apparatus.

An assembly-brazing method according to a second aspect of the present invention is a brazing method for joining a plurality of parts forming an assembly, the method including placing the assembly on or above a stage with a brazing material being interposed between the joint surfaces of a plurality of to-be-joined materials; applying a pressure to the assembly, which is placed on or above the stage, toward the stage by using a pressure applier; heating the assembly under the pressure to a predetermined temperature that melts the brazing material; and applying ultrasonic vibration to at least one of the stage and the pressure applier with the assembly under the pressure having been heated to the predetermined temperature, wherein oxide film on the joint surfaces of the plurality of to-be-joined materials forming the assembly is removed by vibrating the stage and the pressure applier relative to each other by applying ultrasonic vibration in the applying ultrasonic vibration.

In the assembly-brazing method according to the second aspect of the present invention, the method includes applying ultrasonic vibration to at least one of the stage and the pressure applier with the assembly under the pressure having been heated to the predetermined temperature, wherein oxide film on the joint surfaces of the plurality of to-be-joined materials forming the assembly is removed by vibrating the stage and the pressure applier relative to each other by applying ultrasonic vibration in the applying ultrasonic vibration. According to this configuration, similar to the first aspect of the present invention, since oxide film can be removed from the joint surfaces by colliding the plurality of to-be-joined materials, which form the assembly on or above the stage, with each other by producing relative vibration between the stage and the pressure applier, the plurality of to-be-joined materials can be joined with each other by the brazing material melted by heating. Consequently, it is possible to provide brazing using ultrasonic vibration applicable to relatively large and complex assemblies.

### Effect of the Invention

According to this configuration, as discussed above, it is possible to provide a brazing apparatus and an assembly-brazing method using ultrasonic vibration applicable to relatively large and complex assemblies.

### Brief Description of the Drawings

FIG. 1 is a schematic longitudinal cross-sectional view showing a brazing apparatus according to an embodiment.
FIG. 2 is a schematic plan view of a stage and a pressure applier.
FIG. 3 is a schematic longitudinal cross-sectional view showing an exemplary assembly.
FIG. 4 is a graph showing relation between vibration input by a vibration applier, and relative amplitude between the stage and the pressure applier.
FIG. 5 is a schematic plan view illustrating relative vibration between the stage and the pressure applier.
FIG. 6 is a flowchart illustrating an assembly-brazing method according to the embodiment.
FIG. 7 is a graph illustrating temperature change of the assembly by a heater and vibration-applying timing.
FIG. 8 is a graph illustrating a studied experimental result of the relation of vibration input to the relative amplitude between the stage and the pressure applier.
FIG. 9 is a graph illustrating temperature change of the assembly in an example.
FIG. 10 is a graph illustrating relation between joint strength and vibration energy in the example. Modes for Carrying Out the Invention

The following description will describe embodiments according to the present invention with reference to the drawings.

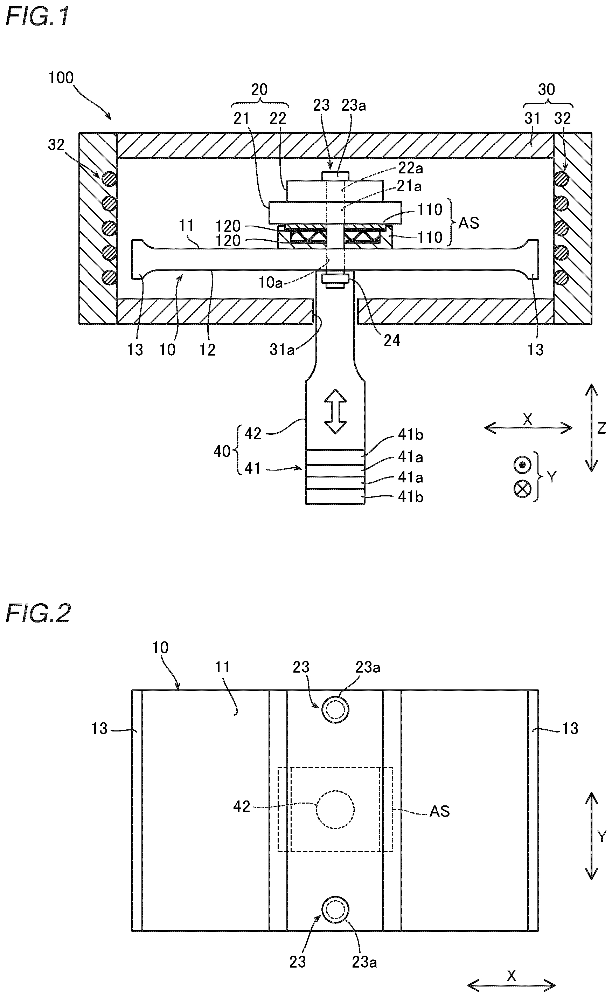

A brazing apparatus 100 and a brazing method according to one embodiment are described with reference to FIGS. 1 to 7. The brazing apparatus 100 is an apparatus joining a plurality of parts to each other by brazing. Brazing is a joining method for joining a plurality of parts to each other by melting a brazing material and using the melted brazing material as an adhesive. Brazing is a joining method for joining parts to each other by using an alloy (brazing material) having a lower melting point than the parts to be joined without actively melting the parts to be joined.

Two directions substantially perpendicular to each other in a horizontal plane are defined as X and Y directions. An upward/downward direction substantially perpendicular to the horizontal plane (X-Y plane) is referred to as a Z direction. Here, the Z direction is parallel to a direction of gravity, and the gravity is applied in the downward direction.

### (Brazing Apparatus)

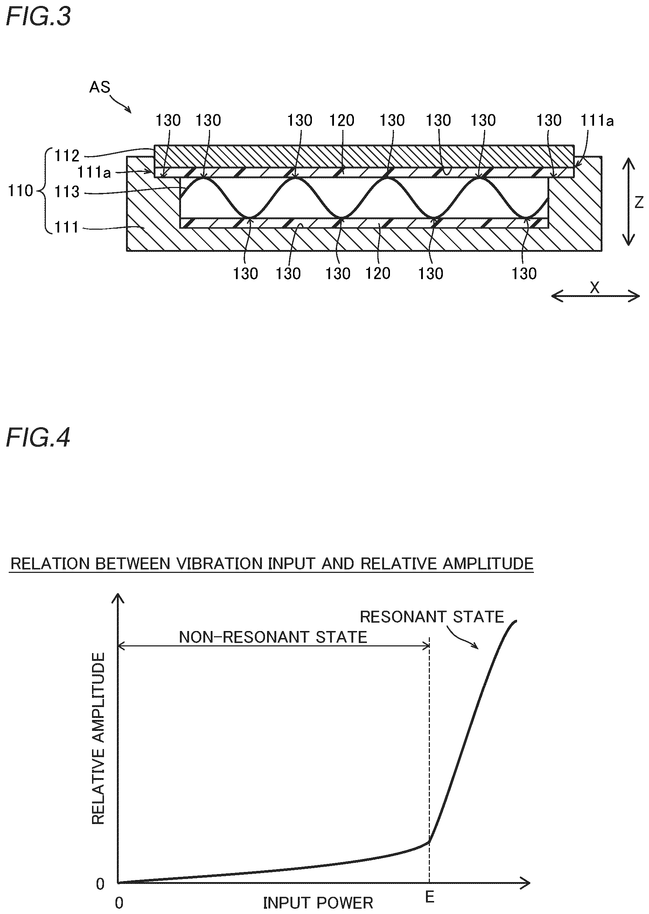

The brazing apparatus 100 according to this embodiment joins a plurality of parts forming an assembly AS to each other by brazing. The assembly AS includes a plurality of separate, independent to-be-joined materials 110. The assembly AS (see FIG. 3) has a structure assembled to interpose brazing materials 120 between joint surfaces 130 of the plurality of to-be-joined materials 110. A structure and a shape of the assembly AS, and materials forming the parts (to-be-joined materials 110) are not limited to a particular structure and a particular shape in this embodiment. The brazing apparatus 100 according to this embodiment is particularly suitable for brazing for the assembly AS, which is relatively large and has a complex structure with a plurality of points to be joined being distributed inside the assembly AS. Also, the brazing apparatus 100 according to this embodiment is particularly suitable for brazing for an aluminum material (aluminum or aluminum alloy) that form a strong oxide film.

As shown in FIG. 1, the brazing apparatus 100 includes a stage 10, a pressure applier 20, a heater 30, and a vibration applier 40.

The stage 10 is a support for the assembly AS. The stage 10 is configured to support the assembly AS with the brazing materials 120 being interposed between the joint surfaces 130 (see FIG. 3) of the plurality of to-be-joined materials 110. The stage 10 has an upper surface 11 on which the assembly AS is placed and a lower surface 12 opposite to the upper surface 11. The upper surface 11 and the lower surface 12 are flat surfaces extending approximately in the horizontal plane. In the exemplary brazing apparatus shown in FIG. 1, the stage 10 has a flat plate shape. In the exemplary brazing apparatus shown in FIG. 2, the stage 10 has a rectangular shape in a plan view. The stage 10 has a predetermined natural frequency (resonance frequency), which is previously specified. Hereafter, for convenience, the resonance frequency of the stage 10 is referred to as a "resonance frequency fc". The stage 10 can include ribs 13 to adjust the resonance frequency fc.

The assembly AS is placed in a center of the upper surface 11 of the stage 10. In this embodiment, the assembly AS has a structure in which the plurality of to-be-joined materials 110 are stacked on each other with the joint surfaces 130 being positioned inside the assembly AS. A plate-fin heat exchanger is shown as a specific of the assembly AS having such a structure in FIG. 3.

In the exemplary assembly of FIG. 3, the assembly AS includes a recessed first part 111, a flat second part 112, and a corrugated fin part 113 as the to-be-joined materials 110. The first part 111 has a bottom surface and side surfaces, and is opened upward. The second part 112 is arranged to straddle the side surfaces of the first part 111 and covers a recessed part of the first part 111. Outer peripheries of the second part 112 are supported by the stepped parts 111a arranged on upper ends of the side surfaces of the first part 111. A space inside the recessed part defined by the first part 111 and the second part 112 serves as flow paths in which fluids flow. The fin part 113 is arranged in the recessed part of the first part 111. The brazing material 120, which has a sheet shape, is arranged between an interior bottom surface of the first part 111 and lower surfaces of the fin part 113. Another brazing material 120 is arranged between a lower surface of the second part 112, and the stepped parts 111a of the first part 111 and upper surfaces of the fin part 113.

In this exemplary assembly, the first part 111, the fin part 113, and the second part 112 are stacked on one after another in this order in the Z direction from the lower side to the upper side. The interior bottom surface of the first part 111 and the lower surfaces of the fin part 113 are the joint surfaces 130 to be joined to each other with the brazing material 120. The lower surface of the second part 112, the bottom surfaces of the stepped parts 111a of the first part 111 and the upper surfaces of the fin part 113 are the joint surfaces 130 to be joined to each other with the brazing material 120. The first part 111, the second part 112, and the fin part 113 are formed of aluminum alloys, for example. The brazing materials 120 are formed of an Al-Si based material, for example. The melting point of the brazing material 120 is lower than melting points of the first part 111, the second part 112 and the fin part 113. The brazing material 120 is a clad material formed of the Al-Si based material (brazing material) formed on front and back surfaces of an aluminum alloy core material. The brazing material 120 is a non-flux material containing no flux.

With reference to FIG. 1 again, the pressure applier 20 is configured to apply a pressure to the assembly AS supported by the stage 10 toward the stage 10. The pressure applier 20 is arranged on the assembly AS placed on the stage 10 and is configured to apply a pressure to the assembly AS by using its own weight. The pressure applier 20 includes a pressure plate 21 in contact with the assembly AS. The pressure plate 21 is arranged on the upper surface of the assembly AS, and a lower surface of the pressure plate is in contact with the assembly AS. The pressure plate 21 has a planar shape larger than the upper surface of the assembly AS. The pressure plate 21 has widths in the X direction and Y direction greater than widths of the assembly AS in the X direction and Y direction. The pressure plate 21 is substantially in surface contact with the entire top surface of the assembly AS and uniformly presses the upper surface of the assembly AS.

A weight (i.e., pressure) of the pressure applier 20 is specified to a value suitable for joining the parts of the assembly AS to each other. The weight of the pressure applier 20 is specified in accordance with a joint area of the assembly AS, and the like. The pressure applier 20 can include a weight adjuster 22 (i.e., a weight) to adjust a pressure force. The weight adjuster 22 has a flat plate shape and is arranged on an upper surface side of the pressure plate 21. The pressure applier 20 can include one or more weight adjusters 22 depending on the weight for adjustment. A single pressure plate 21 may be designed to have a desired weight without the weight adjuster 22. In a case in which the pressure plate 21 and the weight adjuster 22 are separately provided, various pressure forces can be easily realized without designing pressure appliers 20 dedicated to types of assemblies AS.

The pressure applier 20 is connected to the stage 10 through positioners 23 to be able to vibrate relative to the stage 10. Each positioner 23 is a shaft part connecting the pressure applier 20 to the stage 10 and is a bolt in the exemplary brazing apparatus of FIGS. 1 and 2. Specifically, the stage 10, the pressure plate 21, and the weight adjuster 22 have through holes 10a, 21a, and 22a, respectively. The through holes 10a, the through holes 21a, and the through holes 22a are aligned with each other in the horizontal plane (in the X-Y plane). The positioner 23 extends from the upper surface side of the pressure applier 20 (weight adjuster 22) through the through hole 22a, the through hole 21a and the through hole 10a to a lower side below the lower surface 12 of the stage 10. A nut 24 for preventing detachment engages with a threaded part located in a part of the positioner 23 located below the lower surface 12 of the stage 10. As shown in FIG. 2, one set of (a pair of) through holes 10a, one set of through holes 21a, and one set of through holes 22a are provided in sides in the Y direction with respect to the assembly AS. A pair of (two) positioners 23 are provided corresponding to the one set of (a pair of) through holes 10a, the one set of through holes 21a, and the one set of through holes 22a.

The positioners 23 prevent positional deviation between between the pressure applier 20 and the stage 10 in the horizontal direction. Here, in FIG. 1, an outer diameter of a shaft part of the positioner 23 is smaller than an inner diameter of each of the through hole 10a, the through hole 21a and the through hole 22a. The nut 24 of the positioner 23 is spaced downward away from the lower surface 12 of the stage 10 and is out of contact with the lower surface 12 of the stage 10. In other words, a distance between a head 23a of the positioner 23, which is a bolt, and the nut 24 is greater than a distance from the upper surface of the pressure applier 20 to the lower surface 12 of the stage 10. Accordingly, the pressure applier 20 and the stage 10 can vibrate relative to each other. The positioner 23 connects the pressure applier 20 and the stage 10 to prevent large deviation of positions of the pressure applier 20 and the stage 10 in the horizontal plane (X-Y plane) while the pressure applier 20 and the stage 10 can vibrate relative to each other.

As shown in FIG. 1, the heater 30 is configured to heat the assembly AS to a predetermined temperature that melts the brazing material 120 of the assembly AS. In this embodiment, the heater 30 is a heating furnace. In other words, the heater 30 has a furnace chamber 31 that accommodates the stage 10, the assembly AS, and the pressure applier 20 inside the heater, and is configured to heat an interior of the furnace chamber 31. Specifically, the heater 30 includes a coil 32 as a heat source. The coil 32 is installed in partition walls forming the furnace chamber 31. Heat generated by energizing the coil 32 heats the interior of the furnace chamber 31 to the predetermined temperature. As a result, the stage 10, the assembly AS including the brazing materials 120, and the pressure applier 20 accommodated in the furnace chamber 31 are all heated to the predetermined temperature.

The furnace chamber 31 is a box having an upper surface, a lower surface, front and rear side surfaces, and left and right side surfaces, and defines an interior space that is separated from the outside. One of the side surfaces of the furnace chamber 31 can be partially or entirely opened and closed so that the assembly AS can be placed into or taken from the furnace chamber. In this embodiment, the furnace chamber 31 is configured to allow the vibration applier 40 to access the interior of the furnace chamber 31 from the outside of the furnace chamber 31. In other words, an opening 31a is provided in a part of the furnace chamber 31. A vibration transmitter 42, which will be described later, of the vibration applier 40 is inserted into this opening 31a. In this embodiment, the heater 30 has the opening 31a in the lower surface of the furnace chamber 31. The opening 31a is a size slightly larger than a horizontal cross-sectional shape of the vibration transmitter 42, and the vibration transmitter 42 and the furnace chamber 31 (the interior surface of the opening 31a) are kept out of contact with each other.

Accordingly, in the heater 30, the interior of the furnace chamber 31 is partially connected to the outside of the furnace chamber 31 through the opening 31a. In this embodiment, the heater 30 is configured to heat the assembly in a normal atmosphere and at an atmospheric pressure. Here, the normal atmosphere refers to an atmosphere of an environment in which the brazing apparatus 100 is installed and is not a particular gas atmosphere adjusted by a gas supply source or the like. Here, the atmospheric pressure similarly refers to an atmospheric pressure in the environment in which the brazing apparatus 100 is installed, and is not a particular pressure adjusted by an exhaust device or the like.

In brazing, the heater 30 heats the interior of the furnace chamber 31 to the aforementioned predetermined temperature. The predetermined temperature is above a melting start temperature of the brazing material 120 and below a melting start temperature of the materials forming the assembly AS. The predetermined temperature is specified in accordance with the melting point of the brazing material 120. In this embodiment, the predetermined temperature is a temperature at which the brazing material 120 partially melts and is brought into a solid-liquid coexisting state. The brazing apparatus according to this embodiment is particularly suitable for brazing under high temperature conditions, and the predetermined temperature can be, for example, not lower than 300°C.

The vibration applier 40 is configured to apply ultrasonic vibration to at least one of the stage 10 and the pressure applier 20. Although the vibration applier 40 may vibrate only one of the stage 10 and the pressure applier 20 or may vibrate both the stage 10 and the pressure applier 20, the vibration applier 40 is configured to apply ultrasonic vibration to (to vibrate) the stage 10 in the exemplary brazing apparatus shown in FIG. 1.

The vibration applier 40 includes a vibrator 41 generating vibration and a vibration transmitter 42 transmitting the vibration generated by the vibrator 41 to a to-be-vibrated object (stage 10).

The vibrator 41 includes a piezoelectric element. Although a structure of the vibrator 41 is not limited to a particular structure, the vibrator 41 in this embodiment is a Langevin vibrator. The Langevin vibrator has a structure in which piezoelectric elements 41a polarized in a thickness direction are sandwiched between metal blocks 41b arranged on both ends of the piezoelectric element set, and is configured to resonate at a predetermined frequency by adjusting a total length of the vibrator including the metal blocks 41b.

The vibration transmitter 42 includes one end connected to the vibrator 41 and another end in contact with the to-be-vibrated object (stage 10). Although a structure of the vibration transmitter 42 is not limited to a particular structure, the vibration transmitter 42 in this embodiment is a so-called ultrasonic horn. The ultrasonic horn is designed to have the same resonance frequency as the vibrator 41 and has one end and another end whose cross-sectional area is smaller than the one end. Accordingly, the ultrasonic horn amplifies an amplitude of the vibrator 41 at the one end and outputs the amplified amplitude at the another end. As shown in FIG. 2, the vibration transmitter 42 is in contact with a central part of the stage 10 (a position directly below the assembly AS).

With reference to to FIG. 1 again, the vibration applier 40 is configured to apply ultrasonic vibration in a direction in which the plurality of to-be-joined materials 110 are stacked on each other. In other words, in this embodiment, the to-be-joined materials 110 (first part 111, fin part 113, and second part 112) in the assembly AS are stacked on each other in the Z direction, and the ultrasonic vibration applied is vibration in the Z direction. In other words, the ultrasonic vibration in the Z direction is applied to the stage 10 by periodic displacement of the another end of the vibration transmitter 42 in the Z direction.

Here, the vibrator 41 including the piezoelectric elements may not have sufficient heat resistance to endure a brazing temperature. For example, in a case in which the assembly AS is a heat exchanger used at high temperatures, the brazing material 120 is correspondingly a high melting point material having a melting point of several hundred °C. In a case in which the predetermined temperature of the furnace chamber 31 falls out of an operating temperature range of the vibrator 41, it is difficult to install the vibrator 41 in the furnace chamber 31.

To address this, in this embodiment, the vibrator 41 is arranged outside the furnace chamber 31, and the vibration transmitter 42 is inserted into the interior of the furnace chamber 31 through the opening 31a. Here, the stage 10, the pressure applier 20 (parts forming the pressure applier 20), and the vibration transmitter 42 in this embodiment are all formed of a material, such as stainless steel, having a melting point sufficiently higher than the furnace temperature (predetermined temperature).

In the exemplary brazing apparatus shown in FIG. 1, the vibration transmitter 42 is inserted into the interior of the furnace chamber 31 from a lower side of the furnace chamber 31 through the opening 31a and is in contact with the lower surface 12 of the stage 10. Also, the vibration transmitter 42 is configured to support the stage 10 on which the assembly AS is placed. Accordingly, the vibration transmitter 42 in this embodiment serves not only to transmit the vibration of the vibrator 41 to the stage 10, which is the to-be-vibrated object, but also to support a total weight of the stage 10, the assembly AS, and the pressure applier 20 in the furnace chamber 31 as a support. The another end of the vibration transmitter 42 is fixed to the stage 10 by bolts or the like (not shown). Accordingly, the another end of the vibration transmitter 42 vibrates together with the stage 10. In the furnace chamber 31, the stage 10, the assembly AS and the pressure applier 20 are out of contact with other parts except for the vibration transmitter 42. Consequently, the vibration of the vibration transmitter 42 can be efficiently transmitted to the stage 10 without attenuation.

In this embodiment, the vibration applier 40 is configured to remove oxide film on the joint surfaces 130 of the plurality of to-be-joined materials 110 by vibrating the stage 10 and the pressure applier 20 relative to each other with the assembly AS under the pressure having been heated to the predetermined temperature. Relative vibration refers to periodic relative displacement **(i.e.,** vibration) in which one of the stage 10 and the pressure applier 20 is defined as a reference and another periodically moves with respect to the reference.

In this embodiment, the vibration applier 40 is configured to resonantly vibrate the to-be-vibrated object, which is at least one of the stage 10 and the pressure applier 20, by applying ultrasonic vibration to the to-be-vibrated object. In this embodiment, the stage 10 is resonantly vibrated by the application of ultrasonic vibration. Here, the vibration applier 40 generates ultrasonic vibrations at a predetermined resonance frequency in response to resonance of the vibrator 41 and the vibration transmitter 42. The resonance frequency of the vibration applier 40 is specified to agree with the aforementioned resonance frequency fc of the stage 10. In other words, the stage 10 is designed to have the resonance frequency fc substantially agreeing with the resonance frequency of the vibration applier 40. Here, the resonance frequency of the pressure applier 20 is different from the resonance frequency fc of the stage 10.

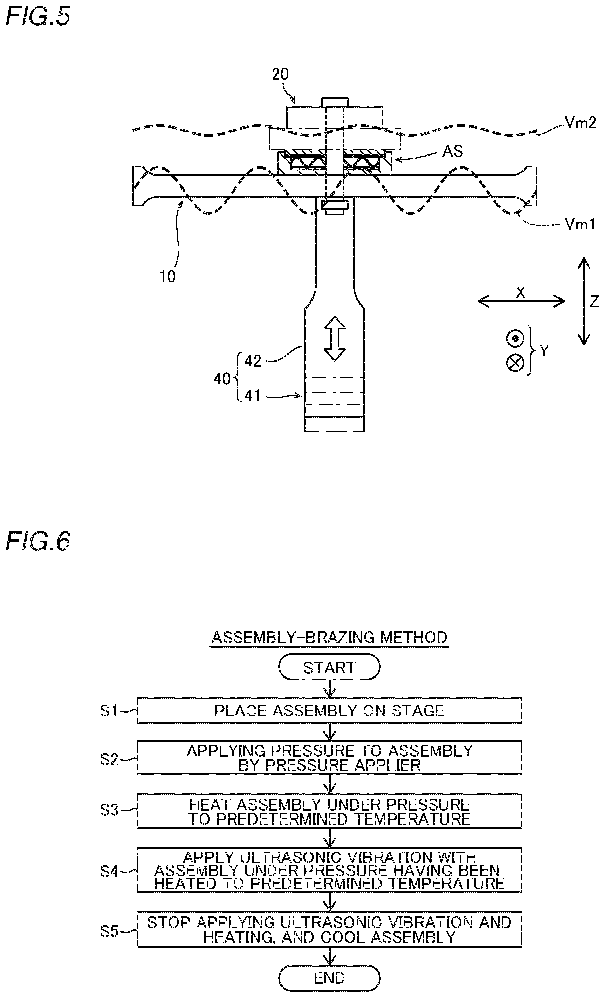

FIG. 4 is a graph showing relation between power input (horizontal axis) to the vibration applier 40 (vibrator 41) and relative amplitude (vertical axis) between the stage 10 and the pressure applier 20. The power input to the vibration applier 40 represents a magnitude of vibration force applied to the stage 10. When the vibration force is small, for example, immediately after start of the application of ultrasonic vibration, the amplitude of the stage 10 is small, and the stage 10 and the pressure applier 20 (and assembly AS) vibrate together with each other. As the vibration force is increased, the relative amplitude rapidly increases when the power input becomes a certain value E or higher so that the stage is brought into a resonance state. In other words, the stage 10, which vibrated together with pressure applier before the resonance state, will vibrate separately from the pressure applier 20 since pressure applier 20 cannot follow the stage. In this state, since the frequency of the vibration force agrees with the resonance frequency fc of the stage 10, the resonance rapidly increases the amplitude of the stage 10. As a result, in a condition in which the stage 10 is in the resonance state, as schematically indicated by dotted wiggly lines in FIG. 5, a vibration mode Vm1 of the stage 10 and a vibration mode Vm2 of the pressure applier 20 become different vibration modes.

Accordingly, the stage 10 and the pressure applier 20 are separately vibrated in the Z direction by the ultrasonic vibration applied by the vibration applier 40. Consequently, collision occurs between the joint surfaces 130 of the to-be-joined materials 110 of the assembly AS sandwiched between the stage 10 and the pressure applier 20 so that oxide formed on the joint surfaces 130 is removed. As a result, the brazing material 120 melting becomes (so-called wetting) in intimate contact with the joint surfaces 130 from which the oxide film is removed.

Here, after the vibration applier 40 starts the application of ultrasonic vibration with the assembly AS under the pressure having been heated to the predetermined temperature, the heater 30 stops heating so that the temperature of the furnace chamber 31 decreases. Joining of the to-be-joined materials 110 is completed by when the brazing material 120 hardens as the temperature in the furnace chamber 31 decreases.

### (Assembly-Brazing Method)

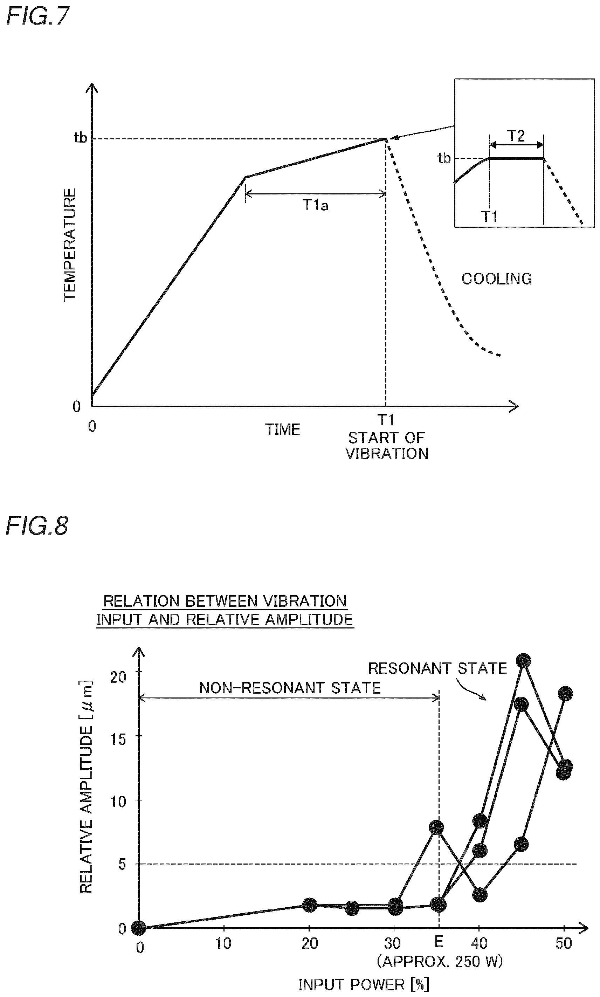

A method of brazing of the assembly AS is now described with reference to FIGS. 6 and 7. The method of brazing for the assembly AS is a method for joining the plurality of parts forming the assembly AS to each other by brazing.

As shown in FIG. 6, the method of brazing for assembly AS includes at least the following steps S1 to S4.
S1: Step of placing the assembly AS with brazing material 120 interposed between the joint surfaces 130 of the plurality of to-be-joined materials 110 on the stage 10.
S2: Step of applying a pressure to the assembly AS, which is placed on the stage 10, toward the stage 10 by using the pressure applier 20.
S3: Step of heating the assembly AS under the pressure to a predetermined temperature that melts the brazing material 120.
S4: Step of applying ultrasonic vibration to at least one of the stage 10 and the pressure applier 20 with the assembly AS under the pressure having been heated to the predetermined temperature. Here, in the exemplary application of ultrasonic vibration illustrated in this embodiment, as described above, ultrasonic vibration is applied only to the stage 10.

First, in the step S1 of placing the assembly AS on the stage 10, the assembly AS is placed at a predetermined position on the upper surface 11 of the stage 10 in the furnace chamber 31. Subsequently, in Step S2 of applying a pressure, the pressure applier 20 is placed on the assembly AS, which is placed on the stage 10. Accordingly, the pressure applier 20 presses the assembly AS at a predetermined pressure force by using its own weight. In this case, as shown in FIG. 1, the pressure applier 20 and the stage 10 are connected to be able to vibrate relative to each other by attachment of the positioners 23. Steps S1 and S2 are carried out with a part of a side surface of the furnace chamber 31 being opened to make the interior of the furnace chamber 31 accessible, as described above. After Steps S1 and S2, the side surface of the furnace chamber 31 is closed so that the interior of the furnace chamber 31 can be heated.

In Step S3 of heating the assembly AS, the assembly AS is heated by the heater 30. In other words, the assembly AS is heated by heating the coil 32 in the furnace chamber 31 by energizing the coil and by increasing the temperature in the furnace chamber 31. The interior of the furnace chamber 31 is heated from a temperature near ambient temperature to the predetermined temperature that melts the brazing material 120. FIG. 7 is a graph illustrating exemplary control furnace temperature (vertical axis) with elapsed time (horizontal axis) from the start of heating. The heater 30 increases the furnace temperature to the predetermined temperature tb to a time T1 from the start of heating. The heater 30 may reduce temperature change during a time period T1a in which the furnace temperature approaches the predetermined temperature tb so that the furnace temperature gradually is increased to the predetermined temperature tb. Accordingly, the temperature in the furnace and the temperature of the assembly AS (brazing material 120) become substantially equal. The heater 30 brings the furnace temperature to the predetermined temperature tb at the time T1. Consequently, the heater 30 brings the brazing material 120 in the assembly AS to the solid-liquid coexisting state in which the brazing material partially melts.

With reference to FIG. 6 again, in Step S4 of applying ultrasonic vibration, the ultrasonic vibration is applied to the stage 10 by the vibration applier 40. In other words, by inputting drive power to the vibrator 41, the vibrator 41 generates vibration, and the generated vibration is transmitted to the stage 10 through the vibration transmitter 42. In this embodiment, in Step S4 of applying ultrasonic vibration, oxide film on the joint surfaces 130 of the plurality of to-be-joined materials 110 forming the assembly AS is removed by vibrating the stage 10 and the pressure applier 20 relative to each other by applying ultrasonic vibration.

Specifically, as shown in FIG. 7, the vibration applier 40 increases the vibration force transmitted to the stage 10 by increasing the input power input to the vibrator 41 to a predetermined value that is greater than the value E (see FIG. 4) during a predetermined time T2 from the time T1. Accordingly, as shown in FIG. 4, the stage 10 is brought in the resonant state so that a relative amplitude between the stage 10 and the pressure applier 20 rapidly increases. Consequently, the relative vibration causes collision between the to-be-joined materials 110 in the assembly AS (between the to-be-joined materials 110 or between the to-be-joined materials 110 and the core material of the brazing material 120) so that the oxide film formed on the joint surfaces 130 is removed.

The time T2 is specified to a value greater than the time required to bring the stage into the resonance state. The time T2 is sufficiently shorter than time T1. The time T2 is a time range from a few seconds to several ten seconds, for example. The time T2 can be specified in consideration of a magnitude of applied energy per weight, amd the like, as described later. Here, during Step S4 of applying ultrasonic vibration, the heater 30 maintains the assembly AS (in the furnace chamber 31) at the predetermined temperature tb. When the time reaches time T2 is reached, the vibration applier 40 stops applying ultrasonic vibration.

In the exemplary method of brazing for the assembly AS shown in FIG. 6 includes Step S5 of stopping applying ultrasonic vibration to the assembly AS and heating the assembly, and cooling the assembly AS without being vibrated. At the time T2 in FIG. 7, the vibration applier 40 stops applying ultrasonic vibration, and the heater 30 also stops heating the interior of the furnace chamber 31. Accordingly, the temperature in the furnace chamber 31 decreases over time, and the assembly AS is cooled without being vibrated. As the temperature of the assembly AS decreases, the brazing material 120 melting in the assembly AS hardens. Consequently, the to-be-joined materials 110 in the assembly AS are joined to each other with the brazing material 120, which hardens. The brazing method according to this embodiment is completed when the temperature of the assembly AS sufficiently decreases.

### (Examples)

The following description describes examples (experimental results) in which the brazing method according to this embodiment was actually implemented by using the brazing apparatus 100.

### <Experimental Conditions>

Brazing was performed on the assembly AS shown in FIG. 3. The weight of the pressure applier 20 was adjusted to apply a pressure force of 25 [N]. The total weight of the stage 10 and the pressure applier 20 was 4.6 [kg]. The resonance frequency fc of the stage 10 was approximately 14.7 [kHz], and the frequency of ultrasonic vibration generated by the vibration applier 40 (i.e., the resonance frequency of the vibrator 41 and the vibration transmitter 42) was the same as the resonance frequency fc.

### <Experimental Result 1: Resonance Vibration>

The input power to the vibration applier 40 without being heated was first increased from 0 [W], and transition from a non-resonant state to the resonant state was seen. The displacements of the stage 10 and the pressure applier 20 were measured by a plurality of laser displacement meters, and the relative amplitude was obtained from the displacement difference between the stage 10 and the pressure applier 20 at the same point in time. A plurality of measurements were taken.

FIG. 8 shows a graph of an experimental result 1. The vertical axis of the graph indicates the amplitude of relative vibration [*µ*m] and the horizontal axis indicates the input power [%]. The input power is represented by a percentage of the maximum value.

As shown in FIG. 8, it can be seen that, in the experimental environment, the relative vibration of the stage 10 and the pressure applier 20 was very small (smaller than 5 [*µ*m]) at input powers of smaller than approximately 35 [%] so that the stage 10 and the pressure applier 20 approximately vibrated together (vibrated at the same period and phase). The relative amplitude rapidly increased when the input power became approximately 35 [%] or more. According to identification of the frequency component of the relative vibration, a frequency component at which the amplitude became the largest in a range of input power approximately not smaller than 35 [%] agreed with the resonance frequency fc of the stage 10. In the experimental environment, approximately 35 [%] corresponded to approximately 250 [W]. From this viewpoint, it is found that, in a case of the value of E = approximately 250 [W] or higher, the stage 10, which was the to-be-vibrated object, was brought in the resonant state and vibrates in the vibration mode Vm1 different from the vibration mode Vm2 of the pressure applier 20 so that a larger relative vibration was generated. The relative amplitude in the resonant state was approximately not smaller than 5 [µm].

Consequently, it is found that control of the input power to the vibration applier 40 can cause the stage 10 to resonate, and can cause the stage 10 and the pressure applier 20 to vibrate relative to each other with an amplitude of approximately not smaller than 5 [µm].

### <Experimental Result 2: Brazing Quality>

After brazing for the assembly AS under the condition that the input power to the vibration applier 40 was not smaller than 250 [W] (approximately not smaller than 35 [%]), a tensile test was conducted on the assembly AS after brazing to confirm its fracture form. Brazing was performed under a plurality of brazing conditions corresponding to different excitation energies (input power × applied time) of ultrasonic vibration applied by the vibration applier 40. In the tensile test, the first part 111 and the second part 112 of the assembly AS were stretched in a direction away from each other (Z direction), and a magnitude of tensile force at the point of fracture (separation) was calculated as joint strength.

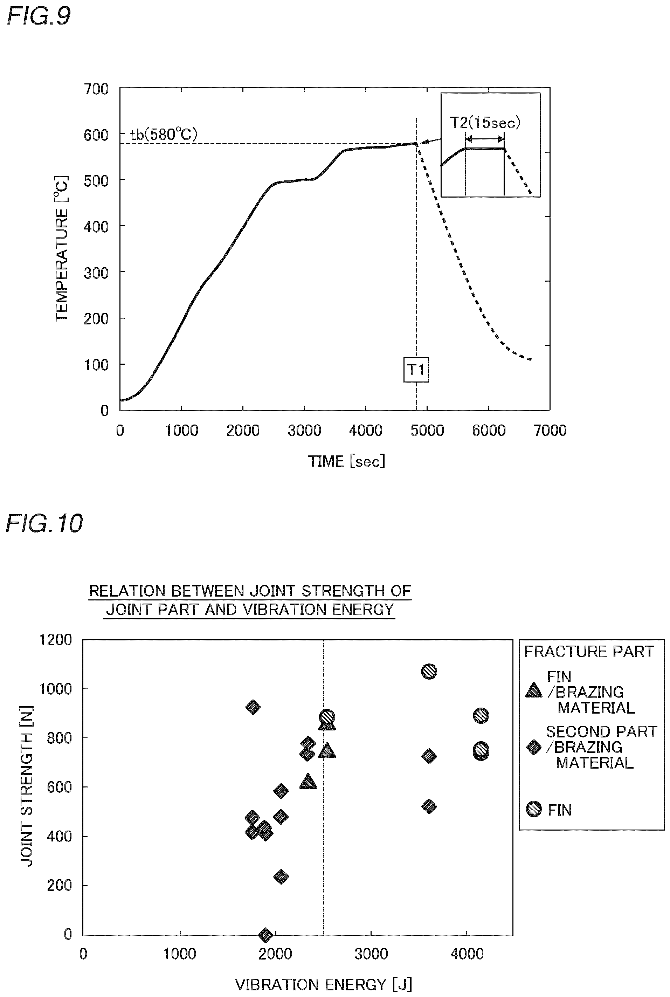

FIG. 9 is a graph illustrating temperature change in brazing with time. The vertical axis indicates the temperature in the furnace [° C] and the horizontal axis indicates the elapsed time from the start of heating [sec]. The predetermined temperature tb = 580°C was specified as the temperature at which the brazing material 120 used partially melts, time T1 and time T2 were specified as T1 = approximately 4800 [sec] and T2 = 15 [sec], respectively.

FIG. 10 is a graph illustrating experimental results. The vertical axis of the graph indicates joint strength [N], and the horizontal axis indicates vibration energy [J]. Different marks corresponding to fracture forms are plotted in the graph in FIG. 10. A first fracture form (fin/brazing material) is a form in which the joint between the fin part 113 and the brazing material 120 was broken. A second form of fracture (second part/brazing material) is a form in which the joint between the second part 112 and the brazing material 120 was broken. A third fracture form (fin) is a form in which the fin part 113 itself was broken. Here, although it is considered that the joint between the first part 111 and the brazing material 120 may be broken, such a fracture form was not seen in this experiment.

In the above fracture forms, the assembly that was broken in the third fracture form can be evaluated as high joint quality. The reason is that the fracture did not occur in the joint part but occurred as fracture of a part of the assembly AS (fin part 113) itself, and as a result it can be evaluated that the joint part surely had sufficient joint strength.

Here, in practice, since required joint strength in the assembly AS depends on design specifications, the joint strength of brazing is required to satisfy the required joint strength, and the joint strength does not necessarily exceed the fracture strength of the parts.

The experimental results in FIG. 10 show that assemblies of the third fracture form, which have a good joint quality, were obtained in a range of vibration energy approximately not smaller than 2500 [J]. From the above experiment, it can be seen that good brazing results were obtained by applying vibration energy of not smaller than 2500 [J] to the stage 10 and the pressure applier 20 having a total mass of 4.6 [kg] with the stage and the pressure applier vibrating relative to each other. The results of this experiment show a possibility that a vibration energy with respect to the total mass of the assembly AS, the stage 10, and the pressure applier 20 of approximately 550 [J/kg] is an index of the condition of vibration energy to be applied to obtain good joint quality.

Although not shown, it was confirmed that, in a case in which brazing was performed under conditions in which vibration was not applied by the vibration applier 40 (vibration energy was 0 [J]), the joint strength became 0 [N] and the parts could not be joined to each other. If vibration was not applied, it was observed that no wetting of the brazing material 120 melting occurred on the joint surface 130, and this may be caused by nonoccurrence of breakage of the oxide film on the joint surface 130.

Also, the above experimental results show that this brazing method according to this embodiment can be used to realize brazing for the assembly AS having a complex structure including the plurality of parts by using the non-flux brazing material 120 in a normal atmosphere and at an atmospheric pressure.

### (Advantages of the Embodiment)

In this embodiment, the following advantages are obtained.

In the brazing apparatus 100 and the brazing method according to this embodiment, as described above, since oxide film on the joint surfaces 130 of the plurality of to-be-joined materials 110 can be removed by vibrating the stage 10 and the pressure applier 20 relative to each other with the assembly AS under the pressure having been heated to the predetermined temperature, oxide film can be removed from the joint surfaces 130 by colliding the plurality of to-be-joined materials 110, which form the assembly AS, with each other by producing relative vibration between the stage 10 and the pressure applier 20. Since the assembly AS entirely vibrates, even in a case of relatively large and complex assemblies AS having a plurality of (a number of) joint points, oxide film on joint surfaces 130 at those points can be effectively removed. Since the oxide film, which prevents joining of the plurality of to-be-joined materials with each other by brazing material 120, is removed, the plurality of to-be-joined materials 110 can be joined with each other by the brazing material 120 melted by heating. Consequently, it is possible to provide brazing using ultrasonic vibration applicable to relatively large and complex assemblies AS. As a result, since the oxide film can be removed by ultrasonic vibration, it is possible to realize brazing for relatively large and complex assemblies AS without flux. Since flux may require residual removal or limit materials to be joined, brazing without flux is useful in terms of simplifying production processes and increasing flexibility in material selection.

Also, in this embodiment, as described above, since the vibration applier 40 is configured to resonantly vibrate the to-be-vibrated object, which is at least one of the stage 10 and the pressure applier 20, by applying ultrasonic vibration to the to-be-vibrated object, relative vibration having a large amplitude, which effectively removes oxide film on the joint surface 130, can be efficiently generated by smaller less energy by using a resonance phenomenon.

Also, in this embodiment, as described above, since, the assembly AS has a structure in which the plurality of to-be-joined materials 110 are stacked on each other with the joint surfaces 130 being positioned inside the assembly AS, and the vibration applier 40 is configured to apply ultrasonic vibration in a direction in which the plurality of to-be-joined materials 110 are stacked on each other, a direction of displacement of the vibration can agree with the direction in which the plurality of to-be-joined materials 110 are stacked on each other (i.e., a direction in which the joint surfaces 130 face each other). Consequently, since the relative vibration between the stage 10 and the pressure applier 20 can cause effective collision between the joint surfaces 130, it is possible to effectively remove the oxide film on the joint surfaces 130.

Also, in this embodiment, as described above, since the pressure applier 20 is arranged on the assembly AS placed on the stage 10 and is configured to apply a pressure to the assembly AS by using its own weight, attenuation of vibration can be reduced as compared with a case in which the pressure applier 20 is attached to an object other than stage 10, and it is possible to easily generate relative vibration between the stage 10 and the pressure applier 20.

Also, in this embodiment, as described above, since the heater 30 has a furnace chamber 31 that accommodates the stage 10, the assembly AS, and the pressure applier 20 inside the heater, is configured to heat an interior of the furnace chamber 31 and has an opening 31a in a part of the furnace chamber 31, and the vibration applier 40 includes a vibrator 41 arranged outside the furnace chamber 31 and a vibration transmitter 42 connected to the vibrator 41 and inserted into the interior of the furnace chamber 31 through the opening 31a, it is possible to apply ultrasonic vibration to the to-be-vibrated object in the furnace chamber 31 through the vibration transmitter 42 with the vibrator 41 being arranged outside the furnace chamber 31, which is heated to the predetermined temperature to melt the brazing material 120. Consequently, it is possible to prevent the vibrator 41 from being subjected to impermissible high temperatures. For example, in a case in which the heating temperature (predetermined temperature) of the heater 30 reaches several hundred °C, the vibrator 41 cannot be used in the furnace chamber 31, but it is possible to apply ultrasonic vibration even under such high temperature conditions.

Also, in this embodiment, as described above, since the heater 30 has the opening 31a in the lower surface of the furnace chamber 31, and the vibration transmitter 42 is inserted into the interior of the furnace chamber 31 from a lower side of the furnace chamber 31 through the opening 31a and is in contact with the lower surface 12 of the stage 10, it is possible to apply ultrasonic vibration to the stage 10 even in a case in which the stage 10, the assembly AS, and the pressure applier 20 are placed in the furnace chamber 31.

Also, in this embodiment, as described above, since the vibration transmitter 42 is configured to support the stage 10 on which the assembly AS is placed, the vibration transmitter 42 serves not only to transmit vibration generated by the vibrator 41 to the stage 10, but also to support the stage 10 in the furnace chamber 31. Consequently, since a separate structure supporting the stage 10 in the furnace chamber 31 is not additionally required, it is possible to simplify a configuration of the apparatus. Also, in a case in which the stage 10 is supported only by the vibration transmitter 42, since the vibration of the stage 10 is not attenuated by contact of the vibration transmitter with other parts, it is possible to more effectively vibrate the stage 10.

Also, in this embodiment, as described above, since the predetermined temperature is a temperature at which the brazing material 120 partially melts and is brought into a solid-liquid coexisting state, it is possible to form a proper flow state in consideration of relative vibration. In other words, since conditions that generate the relative vibration between the stage 10 and the pressure applier 20, which causes collision between parts in the assembly AS, can cause the brazing material 120 to forcedly flow, so that the brazing material 120 can be brought into a solid-liquid coexisting state, which is before the brazing material is brought in a complete liquid phase and has too much fluidity, the brazing material in a proper flow state can be obtained in consideration of the relative vibration.

Also, in this embodiment, as described above, since the heater 30 is configured to heat the assembly in a normal atmosphere and at an atmospheric pressure, it is possible to provide brazing in a normal atmosphere and at an atmospheric pressure without using a vacuum brazing method. Consequently, since even in a case of brazing for relatively large and complex assemblies AS, large heating and exhausting equipment is not required, it is possible to simplify a configuration of the apparatus and to reduce a size of the apparatus.

### [Modified Embodiments]

Note that the embodiment disclosed this time must be considered as illustrative in all points and not restrictive. The scope of the present invention is not shown by the above description of the embodiments but by the scope of claims for patent, and all modifications (modified embodiments) within the meaning and scope equivalent to the scope of claims for patent are further included.

For example, while the example in which the vibration applier 40 applies ultrasonic vibration to only the stage 10 in the stage 10 and the pressure applier 20 has been shown in the aforementioned embodiment, the present invention is not limited to this. In the present invention, the vibration applier 40 may apply ultrasonic vibration only to the pressure applier 20. The vibration applier 40 may apply vibration to both the stage 10 and the pressure applier 20. In this case, a first vibration applier applying ultrasonic vibration to the stage 10 and a second vibration applier applying ultrasonic vibration to the pressure applier 20 may be separately provided. In the case in which ultrasonic vibrations are applied to both the stage 10 and the pressure applier 20, the frequencies of the applied vibrations may be different from each other or the same frequency may be applied in different phases so that relative vibration between them is generated.

Also, while the example in which the vibration applier 40 resonantly vibrates the to-be-vibrated object (stage 10) has been shown in the aforementioned embodiment, the present invention is not limited to this. In the present invention, the vibration applier 40 may not resonantly vibrate the to-be-vibrated object. In the present invention, relative vibration between the stage 10 and the pressure applier 20 may be generated in a non-resonant state as long as the relative vibration is sufficient to remove the oxide film by collision between to-be-joined materials 110 in the assembly AS. Here, since the energy (input power) required in the non-resonant state is much greater than in the resonant state to obtain the same relative amplitude as shown in FIGS. 4 and 8, it can be said that it is preferable to use resonant vibration in terms of energy efficiency and size reduction of the vibration applier 40.

Also, while the example in which the vibration applier 40 vibrates at the same frequency as the resonance frequency fc of the to-be-vibrated object (stage 10) has been shown in the aforementioned embodiment, the present invention is not limited to this. The frequency of ultrasonic vibration applied to to-be-vibrated object may be different from the resonance frequency of the to-be-vibrated object. From the viewpoint of inducing resonant vibration, the frequency of ultrasonic vibration is preferably close to the resonance frequency of the to-be-vibrated object, and may be an integer multiple of the resonance frequency of the to-be-vibrated object.

Also, while the example in which the assembly AS has a structure in which the plurality of to-be-joined materials 110 are stacked on each other with the joint surfaces 130 being positioned inside the assembly AS has been shown in the aforementioned embodiment, the present invention is not limited to this. Although brazing method according to the present invention is suitable for the assembly AS having the aforementioned structure whose parts are difficult to be joined to each other by brazing of known techniques using ultrasonic vibration, the brazing method according to the present invention can be applied to assemblies AS having any structures.

Also, while the example in which the vibration applier 40 applies ultrasonic vibration to the to-be-vibrated object in a direction in which the plurality of to-be-joined materials 110 are stacked on each other has been shown in the aforementioned embodiment, the present invention is not limited to this. The vibration direction of ultrasonic vibration can be in any direction other than the stacking direction. However, from the viewpoint of causing collision between the joint surfaces 130, it is effective to apply vibration in the stacking direction.

Also, while the example in which the pressure applier 20 is arranged on the assembly AS placed on the stage 10 and is configured to apply a pressure to the assembly AS by using its own weight has been shown in the aforementioned embodiment, the present invention is not limited to this. In the present invention, the pressure applier 20 may press the assembly AS by means other than its own weight. For example, the pressure applier 20 may press the assembly AS using an elastic part, such as a spring. However, since the elastic member may attenuate the relative vibration between the stage 10 and the pressure applier 20, it is advantageous that the pressure applier 20 uses its own weight in terms of generating relative vibration with less energy while reducing attenuation.

Also, while the example in which the heater 30 has a furnace chamber 31 that accommodates the stage 10, the assembly AS, and the pressure applier 20 inside the heater has been shown in the aforementioned embodiment, the present invention is not limited to this. In the present invention, the structure of the heater 30 is not limited to particular structure, and the heater 30 may have no furnace chamber 31. The heater 30 may be a gas torch that provides heating by using a gas flame. The heater 30 having the furnace chamber 31 may be a combustion furnace, a hot air furnace having a hot air generator, or the like.

Also, while the example in which the opening 31a is provided in a part of the furnace chamber 31, and ultrasonic vibration is applied to the to-be-vibrated object in the furnace chamber 31 from the vibrator 41 arranged outside the furnace chamber 31 through the vibration transmitter 42, which is inserted into the interior of the furnace chamber 31 through the opening 31a, has been shown in the aforementioned embodiment, the present invention is not limited to this. In the present invention, the vibrator 41 may be placed inside the furnace chamber 31 as long as the vibrator 41 can operate at the temperature inside the furnace chamber 31. Also, an accommodation chamber that accommodates the vibrator 41 with being thermally insulated may be provided in the furnace chamber 31, and the vibration transmitter 42 may pass through an opening formed in the housing chamber and be brought in contact with the to-be-vibrated object. The vibration transmitter 42 may not be the ultrasonic horn, and is required only to transmit vibration of the vibrator 41.

Also, while the example in which the vibration transmitter 42 supports the stage 10 on which the assembly AS is placed has been shown in the aforementioned embodiment, the present invention is not limited to this. The vibration transmitter 42 may not support the stage 10. For example, the stage 10 may include legs on its interior lower surface side and be placed on an interior bottom surface of the furnace chamber 31, or a support may be arranged on the interior bottom surface of the furnace chamber 31 to support the stage 10.

Also, while the example in which the predetermined temperature is a temperature at which the brazing material 120 partially melts and is brought into a solid-liquid coexisting state has been shown in the aforementioned embodiment, the present invention is not limited to this. In the present invention, the predetermined temperature can be a temperature at which the brazing material 120 melts, or a temperature at which the brazing material 120 is brought in a completely liquid phase. The predetermined temperature can be set, for example, to a temperature at which the brazing material 120 has proper flowability depending on the amplitude of relative vibration and the structure of the assembly AS (ease of bringing the brazing material 120 into gaps between the joint surfaces).

Also, while the example in which the heater 30 heats the assembly in a normal atmosphere and at an atmospheric pressure has been shown in the aforementioned embodiment, the present invention is not limited to this. In the present invention, the assembly may be heated in a gas atmosphere other than the normal atmosphere (e.g., inert gas atmosphere) or be heated at a pressure other than the atmospheric pressure.

Also, while the example in which the assembly AS is a heat exchanger has been shown in the aforementioned embodiment, the present invention is not limited to this. The assembly AS can be any article.

Also, while the example in which the vibration applier 40 includes a Langevin vibrator has been shown in the aforementioned embodiment, the present invention is not limited to this. The vibration applier 40 may have any structure generating ultrasonic vibration. The vibrator 41 may be a vibrator other than the Langevin vibrator.

Also, in the aforementioned embodiment, specific numerical values, such as predetermined temperature, time (heating time, vibration application time), input power, and vibratory energy, are merely illustrative, and the invention is not limited to these values. The values can be suitably specified depending on the materials (melting points) of the assembly AS and brazing material 120, the total weight of the stage 10 and the pressure applier 20, and the like.

### Description of Reference Numerals

- 10;: stage
- 12;: lower surface
- 20;: pressure applier
- 30;: heater
- 31;: furnace chamber
- 31a;: opening
- 40;: vibration applier
- 41;: vibrator
- 42;: vibration transmitter
- 100;: brazing apparatus
- 110;: to-be-joined material
- 120;: brazing material
- 130;: joint surface
- AS;: assembly
- tb;: predetermined temperature

## Claims

1. A brazing apparatus comprising:
a stage supporting an assembly with a brazing material being interposed between joint surfaces of a plurality of to-be-joined materials;
a pressure applier applying a pressure to the assembly, which is supported by the stage, toward the stage;
a heater heating the assembly to a predetermined temperature that melts the brazing material in the assembly; and
a vibration applier applying ultrasonic vibration to at least one of the stage and the pressure applier,
wherein
the vibration applier removes oxide film on the joint surfaces of the plurality of to-be-joined materials by vibrating the stage and the pressure applier relative to each other with the assembly under the pressure having been heated to the predetermined temperature.

2. The brazing apparatus according to claim 1, wherein the vibration applier resonantly vibrates a to-be-vibrated object, which is at least one of the stage and the pressure applier, by applying ultrasonic vibration to the to-be-vibrated object.

3. The brazing apparatus according to claim 2, wherein
the assembly has a structure in which the plurality of to-be-joined materials are stacked on or above each other with the joint surfaces being positioned inside the assembly; and
the vibration applier applies ultrasonic vibration to the to-be-vibrated object in a direction extending a direction in which the plurality of to-be-joined materials are stacked on or above each other.

4. The brazing apparatus according to claim 3, wherein the pressure applier is arranged on or above the assembly, which is placed on or above the stage, and presses the assembly by using its own weight.

5. The brazing apparatus according to any of claims 1 to 3, wherein
the heater has a furnace chamber that accommodates the stage, the assembly and the pressure applier inside the heater, heats an interior of the furnace chamber, and has an opening in a part of the furnace chamber; and
the vibration applier includes a vibrator arranged outside the furnace chamber and a vibration transmitter connected to the vibrator and inserted into the interior of the furnace chamber through the opening.

6. The brazing apparatus according to claim 5, wherein
the heater has the opening in a lower surface of the furnace chamber; and
the vibration transmitter is inserted into the interior of the furnace chamber from a lower side of the furnace chamber through the opening and is in contact with the lower surface of the stage.

7. The brazing apparatus according to claim 6, wherein the vibration transmitter supports the stage on which the assembly is placed.

8. The brazing apparatus according to any of claims 1 to 3, wherein the predetermined temperature is a temperature at which the brazing material partially melts and is brought into a solid-liquid coexisting state.

9. The brazing apparatus according to any of claims 1 to 3, wherein the heater heats the assembly in a normal atmosphere and at an atmospheric pressure.

10. A brazing method for joining a plurality of parts forming an assembly, the method comprising:
placing the assembly on or above a stage with a brazing material being interposed between the joint surfaces of a plurality of to-be-joined materials;
applying a pressure to the assembly, which is placed on or above the stage, toward the stage by using a pressure applier;
heating the assembly under the pressure to a predetermined temperature that melts the brazing material; and
applying ultrasonic vibration to at least one of the stage and the pressure applier with the assembly under the pressure having been heated to the predetermined temperature, wherein
oxide film on the joint surfaces of the plurality of to-be-joined materials forming the assembly is removed by vibrating the stage and the pressure applier relative to each other by applying ultrasonic vibration in the applying ultrasonic vibration.
